# EUROPEAN PATENT SPECIFICATION

(11) **EP 4 554 823 B1**
(45) Date of publication and mention of the grant of the patent: **02.09.2026**
(21) Application number: 22744474.2
(22) Date of filing: 15.07.2022
(51) Int. Cl.: B60W 30/045

(54) **DETECTION OF YAW INSTABILITIES IN VEHICLE COMBINATIONS**
DETEKTION VON GIERINSTABILITÄTEN BEI FAHRZEUGKOMBINATIONEN
DÉTECTION D'INSTABILITÉS DE LACET DANS DES COMBINAISONS DE VÉHICULES

(43) Date of publication of application: 21.05.2025
(73) Proprietor: VOLVO TRUCK CORPORATION, 405 08 Göteborg (SE)
(72) Inventor: ERDINC, Umur, 413 26 Göteborg (SE); JONASSON, Mats, 433 49 Partille (SE); JACOBSON, Bengt, 435 38 Mölnlycke (SE)
(74) Representative: Ström & Gulliksson AB
(86) International application number: PCT/EP2022/069950
(87) International publication number: WO 2024/012700

(56) References cited:
- EP-A1- 0 798 615
- GB-A- 2 513 616
- US-A1- 2006 204 347

## Description

### FIELD

This invention relates to detection of unsafe operation in vehicle combinations. In particular, it relates to detection of yaw instabilities for combinations of at least two vehicle units.

### BACKGROUND

Multi-unit vehicle combinations are prone to different modes of unsafe operation including jack-knifing, trailer swing, rollover and off-tracking. Two of these, jack-knifing and trailer swing, can be grouped under the umbrella of yaw instabilities, as they are predominantly embodied in the yaw behaviour of the tractor and trailing units of a vehicle combination.

Jack-knifing occurs when the tractor unit of a vehicle combination starts to skid sideways in slippery road conditions and the driver is not able to correct the skidding in time with the proper amount of steering. The trailing unit pushes the tractor unit causing the tractor unit to turn around a vertical axis until it hits the trailing unit. Jack-knifing is one of the major sources of accidents in multi-unit vehicle combinations. Trailer swing occurs when the wheels of the trailing unit slip, for example due to slippery road conditions, while the wheels of the tractor unit do not. In this case, the trailing unit starts to swing around the vertical axis. All types of vehicle combinations are susceptible to such instabilities.

The patent application US2006/204347A1 describes a method and device for stabilizing a car-trailer combination, focusing on detecting and controlling instabilities such as rolling motions, snaking, and potential roll-over conditions. These instabilities can arise due to factors like high lateral accelerations, obstacle avoidance manoeuvres, lane changes, side winds, road irregularities, or abrupt steering manoeuvres.

These instabilities can be exacerbated by the presence of propulsive elements, for example motors or braking systems, on the trailing unit. Such elements are used increasingly as electric vehicles become more popular. For example, electric motors may be present on some or all axles of the different units. In some instances, a controller of such a vehicle may activate the electric motors of only one axle or unit in order to propel the vehicle. For example, the controller may activate only the electric motors of a trailing unit if the battery of the tractor unit is emptier or if the tractor unit is a conventional tractor unit and the trailing unit is an electric trailer. Electric axles may also be used to capture energy via regenerative braking. A controller may cause only one axle or unit to perform regenerative braking without braking the other axles or units, for example if the battery of one unit is much emptier than the battery of another unit. Propelling or braking with only one axle or unit may create the conditions for yaw instabilities more readily than conventional ways of propelling and braking. To avoid such situations, it is important to detect such yaw instabilities either in advance or at an early point of onset.

### SUMMARY

This disclosure attempts to solve the problems noted above by providing a method of detecting a yaw instability in a vehicle combination. Certain parameters of the vehicle combination are monitored with respect to certain limits to determine if the vehicle combination is operating in a safe manner. **In** particular, limits of the parameters can be used to determine a safe operating envelope for the vehicle combination. The limits are set based on a current operating states of the vehicle combination.

The method allows an upcoming or ongoing yaw instability in a vehicle combination to be detected with high accuracy and at an early stage. The yaw rate and articulation angle give good certainty on whether a jack-knife or trailer swing is taking place. By determining reference values for a safe operating envelope dynamically based on a current operating state of a vehicle combination, a more robust and responsive detection method is provided. In particular, changes in operating conditions that affect the likelihood of a yaw instability occurring, for example vehicle speed and road wheel angle, can be taken into account. This ensures that instabilities that might not be captured by a fixed safe operating envelope can be detected properly. **In** the opposite sense, false detections of instability captured by an inappropriately set safe operating envelope are avoided. By using combinations of a number of different parameters to determine the safe operating envelope, increased accuracy of detection can be provided.

According to the invention of claim 1, there is provided a method of detecting a yaw instability in a vehicle combination, the vehicle combination comprising a tractor unit and at least one trailing unit, the method comprising determining a safe operating envelope for the vehicle combination based on a yaw rate of at least one unit and a current operating state of the vehicle combination, determining a current value of the yaw rate of the at least one unit, comparing the current value to the safe operating envelope, and if the current value is outside the safe operating envelope, determining that a yaw instability is present in the vehicle combination.

Optionally, the current operating state of the vehicle combination comprises a longitudinal speed of the vehicle combination, a lateral acceleration of the tractor unit, a lateral acceleration of the trailing unit, a road wheel angle of the tractor unit and/or a road wheel angle of the trailing unit. According to the invention, determining the safe operating envelope comprises determining a reference value for the yaw rate based on the current operating state of the vehicle combination.

According to the invention, the reference value for the yaw rate of the tractor unit, *ω*_{1,*model*}, is given by: ${ω}_{1 , model} = \frac{{v}_{1 r} tan {δ}_{1}}{{L}_{1}}$ where *v*_{1*r*} is the longitudinal speed of the tractor unit, *δ* is the road wheel angle of the tractor unit, and *L*₁ is the wheelbase of the tractor unit.

Optionally, the reference value for the yaw rate of a first trailing unit, *ω*_{2*,model*}, is given by: ${ω}_{2 , model} = \frac{{v}_{1 r}}{{L}_{2}} \left(sin {θ}_{1 , 2}+cos {θ}_{1 , 2}⋅\frac{{b}_{1} ⋅ tan {δ}_{1}}{{L}_{1}}\right)$ where *L*₂ is the wheelbase of the trailing unit, *θ*_{*1*,*2*} is the an articulation angle between the tractor unit and a first trailing unit, b is the distance from the rear axle of the tractor unit to a coupling point of the vehicle combination, and *δ*₁ is the road wheel angle of the tractor unit. Optionally, the reference value for the yaw rate of trailing units *i>2, ω_{i,model},* can be given by: ${ω}_{i} = \frac{{v}_{ir} ⋅ tan \left({θ}_{i - 1 , i}+{β}_{i - 1 , c}\right)}{{L}_{i}}$ where *β*_{*i-*1,*c*} is the sideslip angle for unit *i-1* at the coupling point.

Optionally, determining the safe operating envelope comprises determining a margin around the reference value for the yaw rate. Optionally, determining the margin comprises determining a fixed margin based on experimental data, or determining a variable margin based on the current operating state of the vehicle combination.

Optionally, the method further comprises determining the safe operating envelope for the vehicle combination based on an articulation angle and/or an articulation angular rate of consecutive units, determining a current value for the articulation angle and/or the articulation angular rate of the consecutive units, comparing the current value for the articulation angle and/or the articulation angular rate of the consecutive units to the safe operating envelope, and if a point defined by the current values is outside the safe operating envelope, determining that a yaw instability is present in the vehicle combination.

Optionally, determining the safe operating envelope of the articulation angle and/or the articulation angular rate of the consecutive units comprises determining a reference value for the articulation angle and/or the articulation angular rate of the consecutive units based on the current operating state of the vehicle combination. Optionally, the reference value for the articulation angle between a tractor unit and a first trailing unit, *θ*_{1*,*2}*_{,ss,monel},* is given by: ${θ}_{1 , 2 , ss , model} = \frac{{L}_{2}}{{L}_{1}} \left(1-\frac{{b}_{1}}{{L}_{2}}\right) tan {δ}_{1}$

Optionally, the reference value for the articulation angular rate between a tractor unit and a first trailing unit, *θ̇*_{1*,*2*,model*}, is given by: ${θ}_{1 , 2 , model} = - \frac{{v}_{1 r}}{{L}_{2}} sin {θ}_{1 , 2} + \frac{{v}_{1 r}}{{L}_{1}} \left(1-\frac{{b}_{1}}{{L}_{2}}cos {θ}_{1 , 2}\right) tan {δ}_{1}$

Optionally, the reference value for the articulation angular rate between consecutive trailing units *i, i+1, θ̇*_{*i,i*+1}*_{,model},* can be given by: ${\dot{θ}}_{i , i + 1 , model} = {ω}_{i} - {ω}_{i + 1}$

Optionally, determining the safe operating envelope comprises determining a margin around the reference value for the articulation angle and/or the articulation angular rate. Optionally, determining the margin comprises determining a fixed margin based on experimental data, or determining a variable margin based on the current operating state of the vehicle combination.

Optionally, the method further comprises determining the safe operating envelope for the vehicle combination based on a yaw angle and/or a yaw acceleration of at least one unit of the vehicle combination, determining a current value for the yaw angle and/or the yaw acceleration of the at least one unit, comparing the current value for the yaw angle and/or the yaw acceleration to the safe operating envelope, and if a point defined by the current values is outside the safe operating envelope, determining that a yaw instability is present in the vehicle combination.

Optionally, determining the safe operating envelope of the yaw angle and/or the yaw acceleration of the at least one unit comprises determining a reference value for the yaw angle and/or the yaw acceleration of the at least one unit based on the current operating state of the vehicle combination. Optionally, the reference value for the yaw angle of the at least one unit is a measured value or is given by the integral of the yaw rate of the unit. Optionally, the reference value for the yaw acceleration of the at least one unit is a measured value or is given by the derivative of the yaw rate of the unit. Optionally, determining the safe operating envelope comprises determining a margin around the reference value for the articulation angle and/or the articulation angular rate. Optionally, determining the margin comprises determining a fixed margin based on experimental data, or determining a variable margin based on the current operating state of the vehicle combination.

Optionally, the method comprises determining the safe operating envelope for the vehicle combination based on at least two parameters and a current operating state of the vehicle combination, determining a current value of each of the at least two parameters, comparing the current values to the safe operating envelope, and if a point defined by the current values is outside the safe operating envelope, determining that a yaw instability is present in the vehicle combination.

Optionally, the at least two parameters comprise a yaw rate of at least one unit of the vehicle combination, and at least one of the yaw rate of another unit of the vehicle combination, an articulation angle of consecutive units, an articulation angular rate of the consecutive units, the yaw angle of at least one unit of the vehicle combination, and the yaw acceleration of at least one unit of the vehicle combination.

Optionally, the method comprises determining that a jack-knife is present in the vehicle combination based on values from the tractor unit. Optionally, the method comprises determining that trailer swing is present in the vehicle combination based on values from at least one trailing unit. Optionally, the method comprises determining that a complete spin out is present in the vehicle combination based on values from the tractor unit and at least one trailing unit.

According to an aspect, there is provided a computer-readable medium having stored thereon instructions that, when executed by one or more processors cause execution of the method steps.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated. Further features of, and advantages with, the present invention will become apparent when studying the appended claims and the following description. The skilled person realizes that different features of the present invention may be combined to create embodiments other than those described in the following, without departing from the scope of the present invention.

### BRIEF DESCRIPTION OF THE DRAWINGS

Exemplary embodiments of the disclosure shall now be described with reference to the drawings in which:
FIG. 1 shows an example vehicle combination;
FIG. 2A shows jack-knifing of a vehicle combination;
FIG. 2B shows trailer swing in a vehicle combination;
FIG. 3 shows an example unit axis system for modelling a vehicle combination;
FIG. 4A shows a generic kinematic model of two units of a vehicle combination;
FIG. 4B shows a kinematic model of a vehicle combination comprising a tractor unit and a trailing unit;
FIG. 5A is a plot of the yaw rate of a tractor unit and a trailing unit for a jack-knife case;
FIG. 5B is a plot of the yaw rate of a tractor unit and a trailing unit for a trailer swing case;
FIG. 6A is a plot of the articulation angle of a vehicle combination for a jack-knife case;
FIG. 6B is a plot of the articulation angle of a vehicle combination for a trailer swing case;
FIG. 7 a flow chart illustrating a method of detecting a yaw instability in a vehicle combination;
FIG. 8 shows a safe operating envelope in a two-dimensional space; and
FIG. 9 is a block diagram illustrating an exemplary computer system in which embodiments of the present disclosure may be implemented.

### SPECIFIC DESCRIPTION

The invention will now be described more fully hereinafter with reference to the accompanying drawings, in which certain aspects of the invention are shown. The invention may, however, be embodied in many different forms and should not be construed as limited to the embodiments and aspects set forth herein; rather, the embodiments are provided by way of example so that this disclosure will be thorough and complete, and will fully convey the scope of the invention to those skilled in the art. Accordingly, it is to be understood that the present invention is not limited to the embodiments described herein and illustrated in the drawings; rather, the skilled person will recognize that many changes and modifications may be made within the scope of the appended claims. Like reference numerals refer to like elements throughout the description.

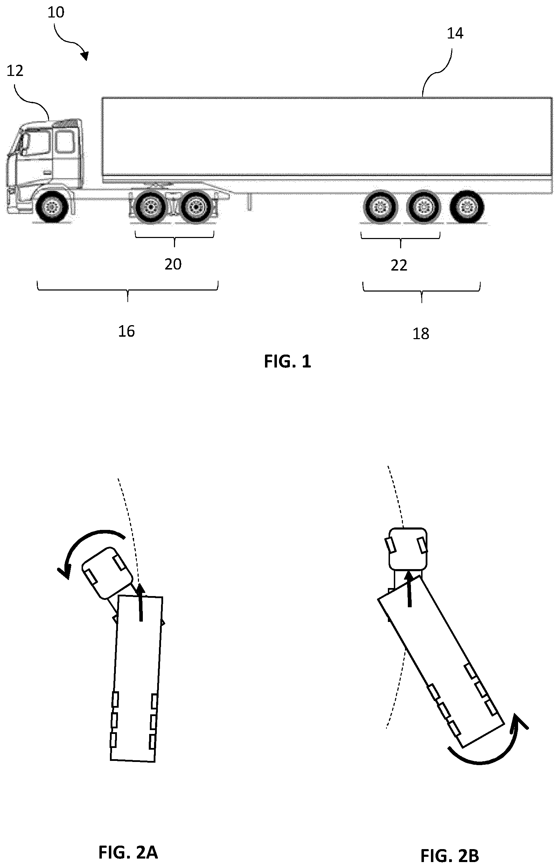

FIG. 1 shows an example vehicle combination 10 of the type considered in this disclosure. The vehicle combination 10 comprises a tractor unit 12 and at least one trailing unit 14. The tractor unit 12 is generally the foremost unit in a vehicle combination, and comprises the cabin for the driver, including steering controls, dashboard displays and the like. Generally, the tractor unit 12 is used to provide propulsion power for the vehicle combination 10. The at least one trailing unit 14 is generally used to store goods that are being transported by the vehicle combination. The at least one trailing unit 14 may be a truck, trailer, dolly and the like. The at least one trailing unit 14 may also provide propulsion to the vehicle combination 10. For example, the trailing unit 14 may comprise one or more electric motors configured to drive one or more axles or individual wheels of the trailing unit 14. A trailing unit 14 without a front axle is known as a semi-trailer.

A vehicle combination 10 may be defined by physical properties of the various units, for example a geometry of each unit and the combination as a whole, a number of axles on each unit, a distance between the axles on each unit, a number of motion support devices (including, for example, electric motors, mechanical service brakes and steering actuators) on each unit, a cornering stiffness on the tyres of each unit, an inertia about a yaw-axis of each unit, an electric motor peak torque output on each unit, an axle load on the axels of each unit.

In the example of FIG. 1, the tractor unit 12 comprises a number of tractor axles 16, and the trailing unit 14 comprises a number of trailer axles 18. At least one of the axles on each unit may be a driven axle, meaning that it is coupled to a propulsion system to drive the vehicle combination 10 forward. The propulsion systems may include traditional propulsion systems coupled to driven axles of the tractor unit 12, and/or electric motors coupled to driven axles of the tractor unit 12 or the trailing unit 14. For example, the three tractor axles 16 may comprise two driven tractor axles 20, and the three trailer axles 18 may comprise two driven trailer axles 22. A unit may be designated by the combination of axles present. In the example of FIG. 1, the vehicle combination 10 comprises a "6x4" tractor unit 12 and a "6x4" trailing unit 14, meaning each unit has six wheels, four of which are driven.

Whilst three tractor axles 16 and three trailer axles 18 are shown, it will be appreciated that any suitable number of axles may be provide on the tractor unit 12 and the at least one trailing unit 14. It will also be appreciated that any number of the tractor axles 16 and/or trailer axles 18 may be driven axles, including zero (i.e. one of the units may include at least one driven axle while the other does not). Furthermore, further trailing units 14 may be provided connected to each other. This gives rise to different types and designations of vehicle combinations.

In order to detect yaw instabilities, proper definitions the unsafe behaviour modes are required. The unsafe behaviour modes that are considered as yaw instabilities are in FIG.s 2A and 2B. FIG. 2A shows jack-knifing the wheels of the tractor unit 12 slipping. In particular, the wheels on the two rear axles of the tractor unit 12 slip while the wheels on the trailing unit 14 do not slip, causing a jack-knife. FIG. 2B shows trailer swing due to the wheels of the trailing unit 14 slipping. In particular, the wheels on the trailing unit 14 slip while the wheels on the tractor unit 12 do not slip, causing trailer swing. An unsafe mode where both jack-knifing and trailer swing occur may be known as a complete spin out.

FIG.s 3 and 4 show examples of how the dynamics of a vehicle combination 10 can be modelled. In order to describe motion and dynamics of the different vehicle units a definition of coordinate systems and global forces acting on them is required. For this, the international standard for road vehicles ISO 8855 is used.

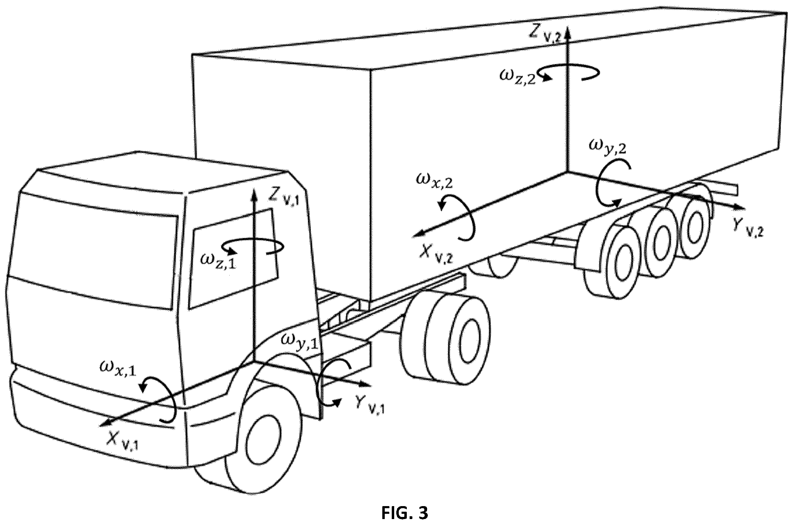

As shown in FIG. 3, *X_{V,i}, Y_{V,i},* and *Z_{V,i}* are the unit axis systems where *i ∈ {1, 2, ... n},* with the tractor unit 12 being unit number 1, and trailing units 14 getting increasingly higher numbers. Whilst only one trailing unit 14 is shown, it will be appreciated that further trailing units may be present in the vehicle combination 10. *n* is the total number of units of the vehicle combination 10. The rate of deviation around each axis is given by *ω*. The yaw rate of each unit is its rate of deviation about the Z axis, denoted *ω*_{*z*,*i*}. In the remainder of this disclosure, the yaw rate of a unit will be simply denoted *ωᵢ*.

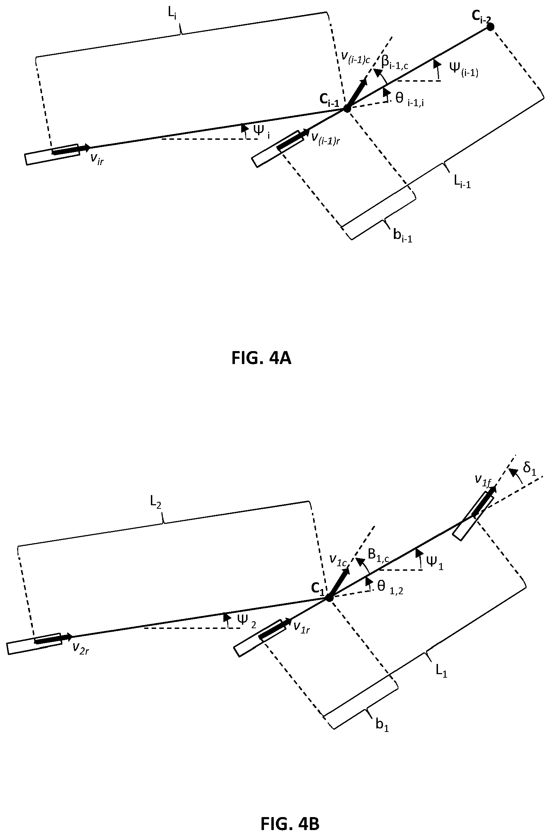

Parameters and dimensions are defined per unit i on the vehicle combination 10, as shown in FIG.s 4A and 4B. FIG. 4A is a generic kinematic model of two units *i-1* and *i* of a vehicle combination 10. Each unit has a wheelbase *Lᵢ.* The coupling point between units *i-1* and *i* is denoted *Cᵢ₋₁*. A distance between a rear axle of a unit *i-1* and the coupling point to the unit *i* is denoted *bᵢ₋₁.* Note that point Cᵢ₋₂ is the front axle of tractor in the case that i=2.

The angle between the longitudinal axes of consecutive units is known as the articulation angle *θ*. In particular, the articulation angle *θ* between units *i* and *i+1* is given by *θ_{i,i+1}* (i.e. the articulation angle *θ* between the tractor unit 12 and the first trailing unit 14 is denoted *θ*_{*1*,*2*}). The rate of change of the articulation angle, known as the articulation angular rate, is denoted by *θ̇*. The yaw angle of a unit is denoted *ψᵢ.* The sideslip angle of a unit is denoted *βᵢ*. *β_{i-1,c}* is the sideslip angle of unit *i-1* at the coupling point. The longitudinal velocity of a unit is taken from a rear axle of the unit and is denoted *vᵢᵣ*. The units have a road wheel angle *δᵢ* (shown in FIG. 4B) which is the angle between the direction of the wheels and the longitudinal direction of the unit.

In **Error! Reference source not found.**B, a kinematic model of a vehicle combination 10 comprising a tractor unit 12 and a trailing unit 14 is shown. The tractor unit has wheelbase L₁ and the trailing unit 14 has wheelbase L₂. The tractor unit 12 and the trailing unit 14 are connected via a moment free articulation point *C₁.* The distance from the rear axle of the tractor unit 12 to the coupling point *C₁* is denoted as *b₁.* The tractor unit 12 has a front axle velocity denoted *v_{if}.* The other parameters are given the appropriate subscripts as discussed above. The front axle of the tractor unit 14 is steered with a road wheel angle δ, which is determined by the steering controls of the tractor unit 14.

The vehicle is modelled as a single-track model, i.e., left and right wheels on a given axle are considered together. The real units can have axle groups with several axles, but in the model they are considered together, i.e., the tractor unit 14 is modelled with only one front and one rear wheel and the trailing unit 14 is modelled with only one wheel. The tyres are modelled with no tyre slip, which means that the tyre velocity vectors *v*₁*ᵣ, v*_{1*f*} and *v*_{2*r*} are directed along the centreline of the tyres.

The inventors have determined that the yaw instabilities shown in FIG.s 2A and 2B can be described by the time response of certain parameters of the vehicle combination. Some of these time responses are shown in FIG.s 5 and 6. The time responses are based on real tests of a vehicle combination 10 comprising a tractor unit 12 and a trailing unit 14. The vehicle combination 10 is protected against a severe jack knife by means of a jack-knife protection cable connected between the tractor unit 12 and the trailing unit 14. The jack-knife protection cables allow maximum of 60° articulation angle, at which point the cable tightens and prevents a catastrophic jack-knife. The time responses in FIG.s 5 and 6 are shown up to the time when the jack knife-cable tightens. For trailer swing, on the other hand, the time responses are shown until the vehicle combination 10 reaches a standstill.

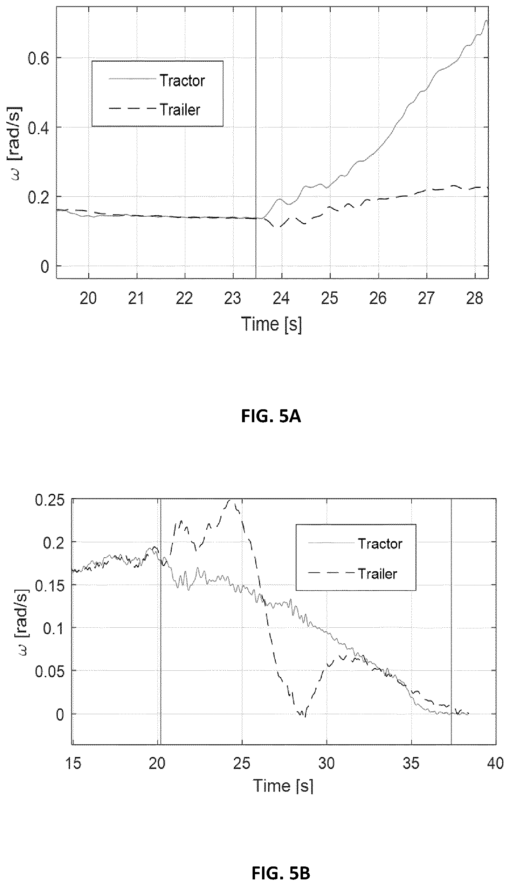

FIG. 5A is a plot of the yaw rate *ω* of the tractor unit 12 and the trailing unit 14 for a jack-knife case. The vertical line at 23.5s indicates the time instant at which braking started. As can be seen, both the yaw rate *ω₁* of the tractor unit 12 and the yaw rate *ω₂* of the trailing unit 14 grow from a steady state value once braking is applied. Therefore, both yaw rates can be indicative of a jack-knife occurring in the vehicle combination 10, and in particular the yaw rate *ω₁* of the tractor unit 12. The yaw rate *ω₁* of the tractor unit 12 grows much faster than the yaw rate *ω₂* of the trailing unit 14. Therefore, the yaw rate *ω₁* of the tractor unit 12 is a particularly good indicator of a jack-knife. Furthermore, the yaw acceleration *ω̇ᵢ* increases for a short time before decreasing. The yaw angle *ψᵢ* will keep increasing as long as the vehicle combination 10 turns around a vertical axis.

FIG. 5B is a plot of the yaw rate *ω* of the tractor unit 12 and the trailing unit 14 for a trailer swing case. The vertical line at 20s indicates the time instant at which braking started, and the vertical line at 37.5s indicates the time instant at which braking stopped. As can be seen, the yaw rate *ω₁* of the tractor unit 12 decreases, whilst the yaw rate *ω₂* of the trailing unit 14 fluctuates, first increasing, then decreasing, increasing again and finally decreasing again. Therefore, both yaw rates can be indicative of trailer swing occurring in the vehicle combination 10, and in particular the yaw rate *ω₂* of the trailing unit 14. The relatively large fluctuations in the yaw rate *ωᵢ* of the trailing unit 14 mean that the yaw rate *ωᵢ* of the trailing unit 14 is a particularly good indicator of trailer swing. Furthermore, the yaw acceleration *ω̇ᵢ* increases for a short time before decreasing. In this case, it first grows to be positive before decreasing and becoming negative. The yaw angle *ψᵢ* will keep increasing as long as the vehicle combination 10 turns around a vertical axis. In this case, the trailing unit 14 stabilizes after some time and so the yaw angle *ψ₂* of the trailing unit 14 will increase before decreasing and becoming close to the yaw angle *ψ₁* of the tractor unit 12.

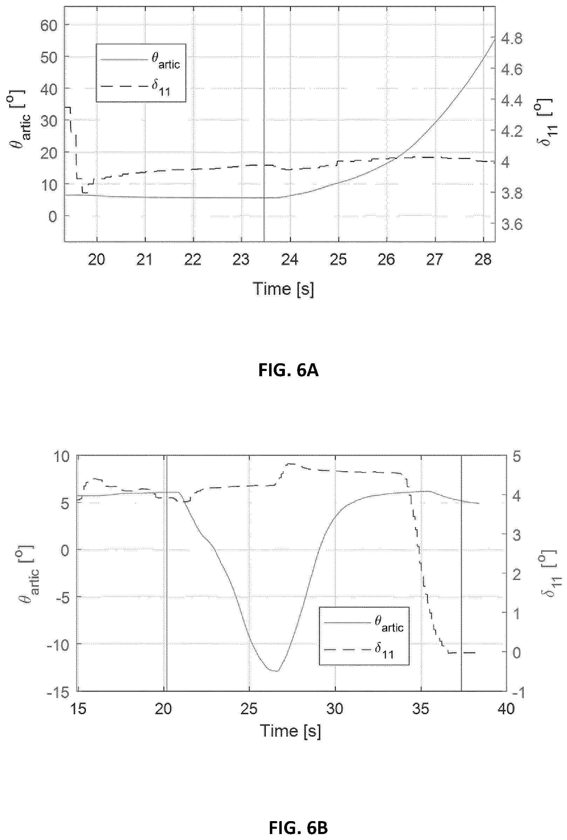

FIG. 6A is a plot of the articulation angle *θ* and the road wheel angle *δ* of a tractor unit for a jack-knife case. Again, the vertical line at 23.5s indicates the time instant at which braking started. As can be seen, the articulation angle *θ* grows significantly in a positive direction. This is for a left-hand turn, and it will be appreciated that the articulation angle *θ* would grow in a negative direction for a right-hand turn. Therefore, the articulation angle *θ* can be indicative of a jack-knife occurring in the vehicle combination 10. The articulation angular rate *θ̇* of the vehicle combination 10 increases for certain time in either a positive or negative direction until the tractor unit 12 hits the trailing unit 14 when the jack-knife occurs.

FIG. 6B is a plot of the articulation angle *θ* and the road wheel angle *δ* of a tractor unit for a trailer swing case. Again, the vertical line at 20s indicates the time instant at which braking started, and the vertical line at 37.5s indicates the time instant at which braking stopped. As can be seen, the articulation angle *θ* fluctuates, first decreasing, then increasing. Therefore, the articulation angle *θ* can be indicative of trailer swing occurring in the vehicle combination 10. The articulation angular rate *θ̇* of the vehicle combination 10 increases for certain time in either a positive or negative direction. However, if the trailer swing is not catastrophic and stabilises over time, then the articulation angular rate will decrease and change sign to until the articulation angle reaches a quasi-steady state value.

With this in mind, a method is proposed in which certain parameters of the vehicle combination 10 are monitored with respect to certain limits to determine if the vehicle combination 10 is operating in a safe manner. In particular, limits of the parameters can be used to determine a safe operating envelope for the vehicle combination 10.

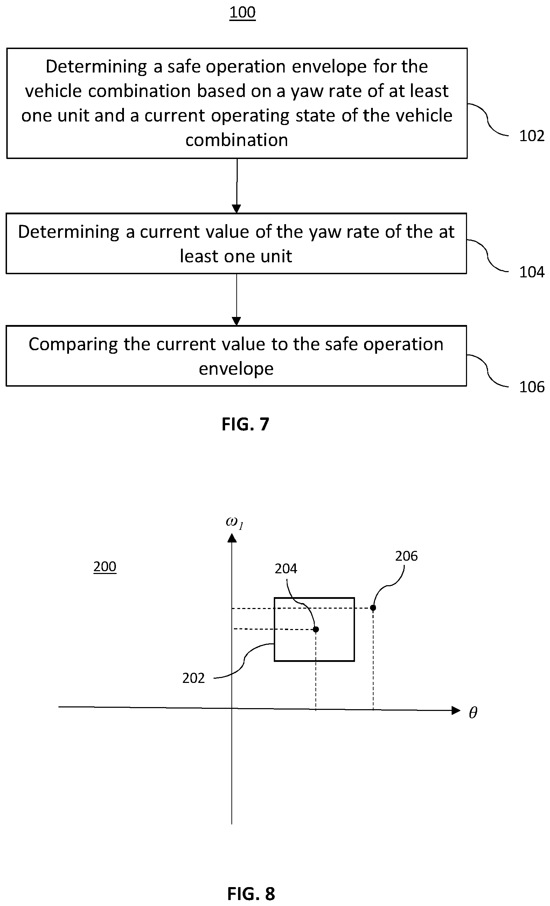

FIG. 7 is a flow chart illustrating a method 100 of detecting a yaw instability in a vehicle combination, such as the vehicle combination 10, comprising a tractor unit 12 and at least one trailing unit 14.

The method 100 comprises, at step 102, determining a safe operating envelope for the vehicle combination 10. The safe operating envelope defines a set of operating conditions where the vehicle is operating in a safe behaviour mode. More specifically, the safe operating envelope defines a set of operating conditions where a yaw instability such as a jack-knife or trailer swing is not present in the vehicle combination.

As will be discussed below, the safe operating envelope can be determined based on limits for one or more parameters of the vehicle combination 10. In particular, the safe operating envelope can be determined based on limits for a yaw rate *ωᵢ* of at least one unit. The limits may be determined taking into account the current operating state of the vehicle combination 10. Other parameters that may be used in determining the safe operating envelope are, for example, the articulation angle *θ_{i,i+1}* between consecutive units, the articulation angular rate *θ̇*_{*i,i*+1} between consecutive units, the yaw angle *ψᵢ* of the tractor unit 12 or the at least one trailing unit 14, and the yaw acceleration *ω̇ᵢ* of the of the tractor unit 12 or the at least one trailing unit 14. In some embodiments, safe operating envelope is determined based at least on a yaw rate *ωᵢ* of at least one unit.

The safe operating envelope can also be determined based on a current operating state of the vehicle combination 10. That is to say, limits of the parameters that define the safe operating envelope may be set dynamically as the vehicle combination is in motion. The current operating state of the vehicle combination 10 may be described by a longitudinal speed *v*_{1*r*} of the vehicle combination 10, a lateral acceleration *a_{y}* of the tractor unit 12 and/or the at least one trailing unit 14, and/or a steering angle or road wheel angle δ of the tractor unit 12 and/or the at least one trailing unit 14. It is noted that the longitudinal speed *v*_{1*r*} of the vehicle combination 10 is taken from a rear axle of the tractor unit 12, as it moves along the longitudinal axis of the vehicle combination 10, whereas the front axle is steered with the steering angle δ, and so is not precisely equal to the longitudinal speed of the vehicle combination 10.

The safe operating envelope may be described in a space, where each parameter determines a dimension of the safe operating envelope. An example of this is illustrated in FIG. 8. In this case, the space 200 is a two-dimensional space, with a first dimension described by the yaw rate of the tractor unit *ω*₁, and a second dimension described by the articulation angle *θ_{1,2}.* A safe operating envelope 202 is defined by upper and lower limits for each parameter. In this case, the space 200 is a two-dimensional space, and the limits are absolute and independent, meaning that the safe operating envelope 202 has the form of a box.

Whilst the space 200 and the safe operating envelope 202 are shown in two dimensions in FIG. 8, it will be appreciated that they could be described in one, three or more dimensions dependent on the number of parameters and units used. For example, one can use any combination of *ωᵢ, θ*_{*i,i*+1}, *θ̇*_{*i,i*+1}*, ψᵢ* or *ω̇ᵢ* in step 102 to give plots of different dimensions depending on the number of units. For combinations with many units, a subset can be selected such that, for example, one safe operating envelope is defined for units 1 and 2, and one for units 2 and 3. It will further be appreciated that the limits for a given parameter may not be absolute and independent. For example, limits of the parameters that define the safe operating envelope may be set dynamically based on a current operating state of the vehicle combination 10 as discussed above. This may result in the safe operating envelope 202 having a different form, such as a circle or an ellipse in two dimension, an ellipsoid in three dimensions, and the like. Determination of the size and form of the safe operating envelope will be described in more detail below.

Returning to FIG. 7, at step 104, current values of the relevant parameters of the vehicle combination 10 are determined. The yaw rate *ωᵢ* of a unit may be obtained directly from a gyroscope sensor of the unit. The articulation angle *θ_{i,i+1}* can be obtained either from an articulation angle sensor of the unit, or it can be estimated with any form of estimator known in the art, such as by using camera etc. The articulation angular rate *θ̇*_{*i,i*+1} can be determined by derivation of the articulation angle *θ*_{*i,i*+1}, by determining the difference of the yaw rates *ωᵢ* of consecutive units, or by a combination of the two with a filter such as Kalman filter. The yaw angle *ψᵢ* can be determined from a global positioning system (GPS) and/or a navigation system, perhaps using a filter where a first input is from a GPS/navigation system and a second input is from the integrals of yaw rates. The yaw acceleration *ω̇ᵢ* can be determined by derivation of the yaw rate *ωᵢ,* for example with a filter such as Kalman filter to remove noise.

The current values determine a point in the space 200. Two such points 204, 206 are shown in FIG. 8. Each point is defined by a current value of the yaw rate of the tractor unit *ω*₁, and a current value of the articulation angle *θ*_{*1*,*2*}. As the space 200 in the example of FIG. 8 is two-dimensional, the points 204, 206 are defined by two values. However, it will be appreciated that the points 204, 206 could be defined by one, three or more dimensions dependent on the number of parameters used.

Returning to FIG. 7, at step 106 the current values of the relevant parameters of the vehicle combination 10 are compared to the safe operating envelope. If the current value is inside the safe operating envelope, then it is determined that the vehicle combination 10 is operating safely. However, if the current value is outside the safe operating envelope, then it is determined that a yaw instability is present in the vehicle combination 10. Therefore, to detect an upcoming or ongoing yaw instability, one can simply check if the relevant parameters are within the safe operating envelope at all times.

In the example of FIG. 8, the first point 204 has a yaw rate of the tractor unit *ω*₁, and an articulation angle *θ*_{*1*,*2*} within the respective limits for those parameters. Therefore, the first point 204 is within the safe operating envelope 202 and the vehicle combination 10 is considered to be operating safely. The second point 206, however, has an articulation angle *θ*_{*1*,*2*} outside the determined limits. Therefore, the second point 206 is outside the safe operating envelope 202 and it is determined that a yaw instability is present in the vehicle combination 10. It will be appreciated that, for a point described in any number of dimensions, it suffices that only one of the current parameter values is outside its respective limits to bring the point outside the safe operating envelope.

Dependent on which parameters are used to define the safe operating envelope, different modes of yaw instability can be determined. For example, if values from the tractor unit 12 are used, for example the yaw rate *ω*₁, yaw angle *ψᵢ,* and/or yaw acceleration *ω̇*₁ of the tractor unit 12, it can be determined that a jack-knife is present in the vehicle combination. Similarly, if values from a trailing unit 14 are used, for example the yaw rate *ωᵢ,* yaw angle *ψᵢ,* and/or yaw acceleration *ω̇ᵢ* of a trailing unit 14, it can be determined that trailer swing is present in the vehicle combination. Where values from both types of unit are used, a complete spin out can be detected.

The method 100 allows an upcoming or ongoing yaw instability in a vehicle combination to be detected with high accuracy and at an early stage. The yaw rate and articulation angle give good certainty on whether a jack-knife or trailer swing is taking place. By determining a safe operating envelope dynamically, based on a current operating state of the vehicle combination, a more robust and responsive detection method is provided. By using combinations of a number of different parameters to determine the safe operating envelope, increased accuracy of detection can be provided.

Returning to step 102 of the method 100, there are a number of ways in which the safe operating envelope can be determined. In one example, the safe operating envelope can be determined based on a reference value and a safety margin for each parameter. That is to say, a modelled or expected value of a given parameter can be determined, along with a buffer either side of that value, to define a safe operating range for the parameter. The reference value and/or the safety margin can be determined based on the current operating state of the vehicle combination 10. In another example, maximum and minimum values of a parameter can be determined, for example based on model and/or experimental data, as discussed above.

To determine a reference value for a given parameter based on the current operating state of the vehicle combination 10, certain relations may be used to define the parameter based on current conditions. Each of the yaw rate *ωᵢ,* yaw angle *ψᵢ,* and yaw acceleration *ω̇ᵢ* of a unit, and the articulation angle *θ_{i,i+1}* and articulation angular rate *θ̇*_{*i,i*+1} of consecutive units can be determined based on current conditions such as the longitudinal speed *v*_{1*r*} of the vehicle combination 10, the steering angle or road wheel angle *δ* of the unit, and the wheelbase *Lᵢ* of the unit, the distance b from the rear axle of the tractor unit 12 to a coupling point C, and the other parameters.

A reference value for the yaw rate of the tractor unit, *ω*₁*_{,model},* can be given by: ${ω}_{1 , model} = \frac{{v}_{1 r} tan {δ}_{1}}{{L}_{1}}$

A reference value for the yaw rate of a first trailing unit, *ω*₂*_{,model},* can be given by: ${ω}_{2 , model} = \frac{{v}_{1 r}}{{L}_{2}} \left(sin {θ}_{1 , 2}+cos {θ}_{1 , 2}⋅\frac{{b}_{1} ⋅ tan {δ}_{1}}{{L}_{1}}\right)$

A reference value for the yaw rate of a further trailing units *i, ω_{i,model},* can be given by: ${ω}_{i} = \frac{{v}_{ir} ⋅ tan \left({θ}_{i - 1 , i}+{β}_{i - 1 , c}\right)}{{L}_{i}}$ where ${β}_{i , c} = arctan \left(\frac{{b}_{i} ⋅ tan \left({θ}_{i - 1 , i}+{β}_{i - 1 , c}\right)}{{L}_{i}}\right)$ and ${v}_{ir} = \frac{{v}_{\left(i-1\right) r}}{cos \left({β}_{\left(i-1\right) c}\right)} ⋅ cos \left({θ}_{i - 1 , i}+{β}_{i - 1 , c}\right)$ where *θ*_{*i*-1*,i*} is the articulation angle between units *i-1* and *i, β_{i,c}* is the sideslip angle for unit *i-, bᵢ* is the distance from the rear axle of the unit *i* to a coupling point C, and *Lᵢ* is the wheelbase of unit i.

A reference value for the yaw angle *ψᵢ* a unit can be given by the integral of the yaw rate *ωᵢ* of the unit, or can be determined by other means, such as measurement. Similarly, a reference value for the yaw acceleration *ω̇ᵢ* of a unit can be given by the derivative of the yaw rate *ωᵢ* of the unit, or can be determined by other means, such as measurement. In the case that these reference values are measured values, a filter such as a Kalman filter may be used.

For steady state driving, a reference value for the articulation angle between a tractor unit and a first trailing unit, *θ*_{1*,*2}*_{,ss,model},* can be given by: ${θ}_{1 , 2 , ss , model} = \frac{{L}_{2}}{{L}_{1}} \left(1-\frac{{b}_{1}}{{L}_{2}}\right) tan {δ}_{1}$

A reference value for the articulation angular rate between a tractor unit and a first trailing unit, *θ̇*_{1*,*2}*_{,model},* can be given by: ${\dot{θ}}_{1 , 2 , model} = - \frac{{v}_{1 r}}{{L}_{2}} sin {θ}_{1 , 2} + \frac{{v}_{1 r}}{{L}_{1}} \left(1-\frac{{b}_{1}}{{L}_{2}}cos {θ}_{1 , 2}\right) tan {δ}_{1}$

A reference value for the articulation angle, *θ*_{1*,*2}*_{,model},* can also be given by the integral of the function for articulation angular rate, *θ̇*_{1*,*2}*_{,model}.*

A reference value for the articulation angular rate between consecutive trailing units *i, i+1, θ̇*_{*i,i*+1}*_{,model},* can be given by: ${\dot{θ}}_{i , i + 1 , model} = {ω}_{i} - {ω}_{i + 1}$

A reference value for the steady state articulation angle between consecutive trailing units i, *i+1, θ*_{*i,i+*1}*_{,ss,model},* can be found by using setting *θ̇*_{*i,i*+1} to zero, then solving for *θ*_{*i-*1,}*ᵢ.*

Additionally, a small angle approximation can be applied for *θ*_{*i,i*+1}*,* where cos(*θ*_{*i*,*i*+1}) ≅ 1 and sin(*θ*_{*i*,*i*+1}) ≅ *θ*_{*i,i*+1}*.*

Once reference values for the parameters are determined, a safety margin around the reference value is also determined in order to define a safe operating range for each parameter. The safety margin may be a fixed margin, determined for example based on model or experimental data. For example, a number of manoeuvres can be logged both with and without yaw instabilities. These can be performed with many different speeds, lateral accelerations, frictions, slopes, load distributions, road wheel angles, etc. These can then be evaluated and the margins can be tuned, if possible as a function of vehicle states and/or environmental variables. Alternatively, a machine learning model can be trained to tune the margins. Alternatively, the safety margin may be a variable margin, determined for example based on the current operating state of the vehicle combination 10.

To determine a fixed margin, experimental or model data relating to a vehicle combination 10 can be used to determine safe and unsafe operating conditions. This can be done using real tests, computer model simulations, a machine learning model, or other suitable means known in the art. For the yaw rate *ωᵢ,* of a unit, a margin can be set at for example ±5°/sec from the reference value, ±3°/sec from the reference value, ±1°/sec from the reference value, or any other suitable margin determined by the methods discussed above. For the articulation angle *θ*_{*i,i*+1}, a margin can be set at for example ±5° from the reference value, ±2° from the reference value, ±1° from the reference value, or any other suitable margin determined by the methods discussed above. For the articulation angular rate *θ̇*_{*i,i*+1}*,* a margin can be set at for example ±5°/sec from the reference value, ±2°/sec from the reference value, ±1°/sec from the reference value, or any other suitable margin determined by the methods discussed above. For the yaw angle *ψᵢ,* a margin can be set at for example ±5° from the reference value, ±3° from the reference value, or any other suitable margin determined by the methods discussed above. For the yaw acceleration *ω̇ᵢ* a margin can be set at for example ±3° from the reference value, ±1° from the reference value, or any other suitable margin determined by the methods discussed above.

To determine a variable margin based on the current operating state of the vehicle combination 10, experimental or model data relating to a vehicle combination 10 can be used to determine safe and unsafe operating conditions as the operating state of the vehicle combination 10 changes. This can be done using real tests, computer model simulations, a machine learning model, or other suitable means known in the art. The margin can vary with vehicle states such as longitudinal speed *v*_{1*r*} of the vehicle combination 10, lateral acceleration *a_{y}* of the tractor unit 12 and/or the at least one trailing unit 14, and road wheel angle *δ* of the unit.

For example, as the longitudinal speed increases, the lateral acceleration increases, and the modelled reference value may become less reliable. Therefore, it may be desired to increase the margin as the longitudinal speed increases to take into account inaccuracies in the model. For example, for the articulation angle *θ*, the limit *θ^{lim}* may be given by: ${θ}_{i , i + 1}^{lim} \left({v}_{ir}\right) = 2 ° + max \left(\frac{abs \left({v}_{ir}\right)}{10}, 1\right) ⋅ 1 °$

This means that for zero speed, the limit is 2°, and for speeds of 10 m/s (36 kph) and above, the limit is 3°, with a linear relationship between 0 m/s and 10 m/s.

As discussed above, as the lateral acceleration increases, the modelled reference value may become less reliable. Therefore, it may be desired to increase the margin as the lateral acceleration increases to take into account inaccuracies in the model. For example, for zero lateral acceleration, a fixed limit can be used as discussed. For a maximum realistic lateral acceleration of *0.4g,* where g is the gravitational acceleration, the limits may be increased, for example by 50%. It is noted that the maximum realistic lateral acceleration for heavy vehicles is typically between 0.3g and 0.4g. Between those two values, a linear interpolation can be used. For example, for the articulation angle *θ*, the limit *θ^{lim}* may be given by: ${θ}_{i , i + 1}^{lim} \left({a}_{y , i}\right) = 2 ° + max \left(\frac{abs \left({a}_{y , i}\right)}{0.4 ⋅ g}, 1\right) ⋅ 1 °$

As the road wheel angle increases, the lateral acceleration increases, and the modelled reference value may become less reliable. Therefore, it may be desired to increase the margin as the road wheel angle increases to take into account inaccuracies in the model. For example, for the articulation angle *θ*, the limit *θ^{lim}* may be given by: ${θ}_{i , i + 1}^{lim} \left(δ\right) = 2 ° + max \left(\frac{abs \left(δ\right)}{10 °}, 1\right) ⋅ 1 °$

This means that for zero road wheel angle, the limit is 2°, and for road wheel angle having a magnitude of 10° and above, the limit is 3°, with a linear relationship between 0° and 10°.

By determining reference values and margins for a safe operating envelope dynamically based on a current operating state of a vehicle combination, a more robust and responsive detection method is provided. In particular, changes in operating conditions that affect the likelihood of a yaw instability occurring, for example vehicle speed and road wheel angle, can be taken into account. This ensures that instabilities that might not be captured by a fixed safe operating envelope can be detected properly. In the opposite sense, false detections of instability captured by an inappropriately set safe operating envelope are avoided.

A tyre model can be used in combination with the methods disclosed above. The tyre model can be that disclosed in the Vehicle Dynamics Compendium from Bengt Jacobson et al, Vehicle Dynamics Group, Division Vehicle and Autonomous Systems, Department of Mechanics and Maritime, Chalmers University of Technology, www.chalmers.se. For example, the tyre model may take into account the cornering stiffness of the tyres of the vehicle combination, which is a value defining tires how much lateral force is created for a certain side slip angle of the tyre. This also allows forces and sideslip to be taken into account, giving a more robust model.

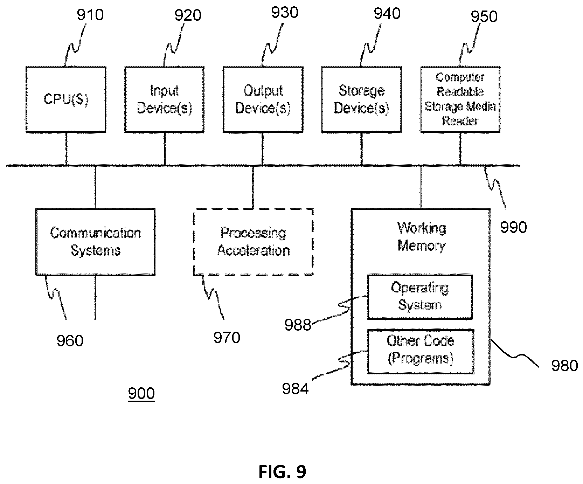

FIG. 9 is a block diagram illustrating an exemplary computer system 900 in which embodiments of the present disclosure may be implemented. This example illustrates a computer system 900 such as may be used, in whole, in part, or with various modifications, to provide the functions of the disclosed system. For example, various functions may be controlled by the computer system 900, including, merely by way of example, simulating, determining, classifying, receiving, etc.

The computer system 900 is shown comprising hardware elements that may be electrically coupled via a bus 990. The hardware elements may include one or more central processing units 910, one or more input devices 920 (e.g., a mouse, a keyboard, etc.), and one or more output devices 930 (e.g., a display device, a printer, etc.). The computer system 900 may also include one or more storage devices 940. By way of example, the storage devices 940 may be disk drives, optical storage devices, solid-state storage device such as a random-access memory ("RAM") and/or a read-only memory ("ROM"), which can be programmable, flash-updateable and/or the like.

The computer system 900 may additionally include a computer-readable storage media reader 950, a communications system 960 (e.g., a modem, a network card (wireless or wired), an infrared communication device, Bluetooth^{™} device, cellular communication device, etc.), and a working memory 980, which may include RAM and ROM devices as described above. In some embodiments, the computer system 900 may also include a processing acceleration unit 970, which can include a digital signal processor, a special-purpose processor and/or the like.

The computer-readable storage media reader 950 can further be connected to a computer-readable storage medium, together (and, optionally, in combination with the storage devices 940) comprehensively representing remote, local, fixed, and/or removable storage devices plus storage media for temporarily and/or more permanently containing computer-readable information. The communications system 960 may permit data to be exchanged with a network, system, computer and/or other component described above.

The computer system 900 may also comprise software elements, shown as being currently located within the working memory 980, including an operating system 988 and/or other code 984. It should be appreciated that alternative embodiments of a computer system 900 may have numerous variations from that described above. For example, customised hardware might also be used and/or particular elements might be implemented in hardware, software (including portable software, such as applets), or both. Furthermore, connection to other computing devices such as network input/output and data acquisition devices may also occur.

Software of the computer system 900 may include code 984 for implementing any or all of the function of the various elements of the architecture as described herein. For example, software, stored on and/or executed by a computer system such as the system 900, can provide the functions of the disclosed system. Methods implementable by software on some of these components have been discussed above in more detail.

## Claims

1. A method (100) of detecting a yaw instability in a vehicle combination (10), the vehicle combination comprising a tractor unit (12) and at least one trailing unit (14), the method comprising:
determining (102) a safe operating envelope (202) for the vehicle combination (10) based on a yaw rate of at least one unit (12, 14) and a current operating state of the vehicle combination (10);
determining (104) a current value of the yaw rate of the at least one unit (12, 14);
comparing (106) the current value to the safe operating envelope (202); and
if the current value is outside the safe operating envelope (202), determining that a yaw instability is present in the vehicle combination (10);
**characterized in that** determining the safe operating envelope (202) comprises determining a reference value for the yaw rate based on the current operating state of the vehicle combination (10), wherein the reference value for the yaw rate of the tractor unit, *ω*_{1,*model*}, is given by: ${ω}_{1 , model} = \frac{{v}_{1 r} tan {δ}_{1}}{{L}_{1}}$ where *v*_{1*r*} is the longitudinal speed of the tractor unit (12), *δ*₁ is the road wheel angle of the tractor unit (12), and *L*₁ is the wheelbase of the tractor unit (12).

2. The method (100) of claim 1, wherein the current operating state of the vehicle combination (10) comprises a longitudinal speed of the vehicle combination (10), a lateral acceleration of the tractor unit (12), a lateral acceleration of the trailing unit (14), a road wheel angle of the tractor unit (12), and/or a road wheel angle of the trailing unit (14).

3. The method (100) of any preceding claim, wherein determining the safe operating envelope (202) comprises determining a margin around the reference value for the yaw rate, preferably wherein determining the margin comprises determining a fixed margin based on experimental data, or determining a variable margin based on the current operating state of the vehicle combination (10).

4. The method (100) of any preceding claim, further comprising:
determining the safe operating envelope (202) for the vehicle combination (10) based on an articulation angle and/or an articulation angular rate of consecutive units; (12, 14)
determining a current value for the articulation angle and/or the articulation angular rate of the consecutive units (12, 14);
comparing the current value for the articulation angle and/or the articulation angular rate of the consecutive units (12, 14) to the safe operating envelope (202); and
if a point defined by the current values is outside the safe operating envelope (202), determining that a yaw instability is present in the vehicle combination (10).

5. The method (100) of claim 4, wherein determining the safe operating envelope (202) of the articulation angle and/or the articulation angular rate of the consecutive units (12, 14) comprises determining a reference value for the articulation angle and/or the articulation angular rate of the consecutive units (12, 14) based on the current operating state of the vehicle combination (10).

6. The method (100) of any of claims 4 or 5, wherein determining the safe operating envelope (202) comprises determining a margin around the reference value for the articulation angle and/or the articulation angular rate, preferably wherein determining the margin comprises determining a fixed margin based on experimental data, or determining a variable margin based on the current operating state of the vehicle combination (10).

7. The method (100) of any preceding claim, further comprising:
determining the safe operating envelope (202) for the vehicle combination (10) based on a yaw angle and/or a yaw acceleration of at least one unit (12, 14) of the vehicle combination (10);
determining a current value for the yaw angle and/or the yaw acceleration of the at least one unit (12, 14);
comparing the current value for the yaw angle and/or the yaw acceleration to the safe operating envelope (202); and
if a point defined by the current values is outside the safe operating envelope (202), determining that a yaw instability is present in the vehicle combination (10).

8. The method (100) of claim 7, wherein determining the safe operating envelope (202) of the yaw angle and/or the yaw acceleration of the at least one unit (12, 14) comprises determining a reference value for the yaw angle and/or the yaw acceleration of the at least one unit (12, 14) based on the current operating state of the vehicle combination (10).

9. The method (100) of claim 8, wherein the reference value for the yaw angle of the at least one unit (12, 14) is a measured value or is given by the integral of the yaw rate of the unit (12, 14).

10. The method (100) of claim 8 or 9, wherein the reference value for the yaw acceleration of the at least one unit (12, 14) is a measured value or is given by the derivative of the yaw rate of the unit (12, 14).

11. The method (100) of any of claims 8 to 10, wherein determining the safe operating envelope (202) comprises determining a margin around the reference value for the articulation angle and/or the articulation angular rate, preferably wherein determining the margin comprises determining a fixed margin based on experimental data, or determining a variable margin based on the current operating state of the vehicle combination (10).

12. The method (100) of any preceding claim, comprising:
determining the safe operating envelope (202) for the vehicle combination (10) based on at least two parameters and a current operating state of the vehicle combination (10);
determining a current value of each of the at least two parameters;
comparing the current values to the safe operating envelope (202); and
if a point defined by the current values is outside the safe operating envelope (202), determining that a yaw instability is present in the vehicle combination (10).

13. The method (100) of claim 12, wherein the at least two parameters comprise a yaw rate of at least one unit (12, 14) of the vehicle combination (10), and at least one of the yaw rate of another unit of the vehicle combination (10), an articulation angle of consecutive units (12, 14), an articulation angular rate of the consecutive units (12, 14), the yaw angle of at least one unit (12, 14) of the vehicle combination (10), and the yaw acceleration of at least one unit (12, 14) of the vehicle combination (10).

14. The method (100) of any preceding claim, comprising at least one of determining that a jack-knife is present in the vehicle combination (10) based on values from the tractor unit (12) and determining that trailer swing is present in the vehicle combination (10) based on values from at least one trailing unit (14).

15. A computer-readable medium having stored thereon instructions that, when executed by one or more processors (910) cause execution of the method steps according to any preceding claim.

## Patentansprüche

1. Ein Verfahren (100) zum Erkennen einer Gierinstabilität in einer Fahrzeugkombination (10), wobei die Fahrzeugkombination eine Zugmaschine (12) und mindestens eine Anhängereinheit (14) umfasst, wobei das Verfahren Folgendes umfasst:
- Bestimmen (102) eines sicheren Betriebsbereichs (202) für die Fahrzeugkombination (10) basierend auf einer Gierrate von mindestens einer Einheit (12, 14) und einem aktuellen Betriebszustand der Fahrzeugkombination (10);
- Bestimmen (104) eines aktuellen Wertes der Gierrate der mindestens einen Einheit (12, 14);
- Vergleichen (106) des aktuellen Wertes mit dem sicheren Betriebsbereich (202); und
- wenn der aktuelle Wert außerhalb des sicheren Betriebsbereichs (202) liegt, Bestimmen, dass eine Gierinstabilität in der Fahrzeugkombination (10) vorliegt;
- **dadurch gekennzeichnet, dass** das Bestimmen des sicheren Betriebsbereichs (202) das Bestimmen eines Referenzwertes für die Gierrate basierend auf dem aktuellen Betriebszustand der Fahrzeugkombination (10) umfasst, wobei der Referenzwert für die Gierrate der Zugmaschine, ω_{1,model}, gegeben ist durch: ${ω}_{1 , model} = \frac{{υ}_{1 r} {tanδ}_{1}}{{L}_{1}}$ wobei *v*_{1*r*} die Längsgeschwindigkeit der Zugmaschine (12) ist, *δ*₁ der Radaufstandswinkel der Zugmaschine (12) ist und *L*₁ der Radstand der Zugmaschine (12) ist.

2. Das Verfahren (100) gemäß Anspruch 1, wobei der aktuelle Betriebszustand der Fahrzeugkombination (10) Folgendes umfasst: eine Längsgeschwindigkeit der Fahrzeugkombination (10), eine Querbeschleunigung der Zugmaschine (12), eine Querbeschleunigung der Anhängereinheit (14), einen Radaufstandswinkel der Zugmaschine (12) und/oder einen Radaufstandswinkel der Anhängereinheit (14).

3. Das Verfahren (100) gemäß einem der vorstehenden Ansprüche, wobei das Bestimmen des sicheren Betriebsbereichs (202) das Bestimmen eines Spielraums um den Referenzwert für die Gierrate umfasst, vorzugsweise wobei das Bestimmen des Spielraums das Bestimmen eines festen Spielraums umfasst basierend auf experimentellen Daten oder das Bestimmen eines variablen Spielraums basierend auf dem aktuellen Betriebszustand der Fahrzeugkombination (10).

4. Das Verfahren (100) gemäß einem der vorstehenden Ansprüche, das ferner Folgendes umfasst:
- Bestimmen des sicheren Betriebsbereichs (202) für die Fahrzeugkombination (10) basierend auf einem Gelenkwinkel und/oder einer Gelenkwinkeländerungsrate von aufeinanderfolgenden Einheiten; (12, 14)
- Bestimmen eines aktuellen Wertes für den Gelenkwinkel und/oder die Gelenkwinkeländerungsrate der aufeinanderfolgenden Einheiten (12, 14);
- Vergleichen des aktuellen Wertes für den Gelenkwinkel und/oder die Gelenkwinkeländerungsrate der aufeinanderfolgenden Einheiten (12, 14) mit dem sicheren Betriebsbereich (202); und
- wenn ein Punkt, der durch die aktuellen Werte definiert ist, außerhalb des sicheren Betriebsbereichs (202) liegt, Bestimmen, dass eine Gierinstabilität in der Fahrzeugkombination (10) vorliegt.

5. Das Verfahren (100) gemäß Anspruch 4, wobei das Bestimmen des sicheren Betriebsbereichs (202) des Gelenkwinkels und/oder der Gelenkwinkeländerungsrate der aufeinanderfolgenden Einheiten (12, 14) das Bestimmen eines Referenzwertes für den Gelenkwinkel und/oder die Gelenkwinkeländerungsrate der aufeinanderfolgenden Einheiten (12, 14) basierend auf dem aktuellen Betriebszustand der Fahrzeugkombination (10) umfasst.

6. Das Verfahren (100) gemäß einem der Ansprüche 4 oder 5, wobei das Bestimmen des sicheren Betriebsbereichs (202) das Bestimmen eines Spielraums um den Referenzwert für den Gelenkwinkel und/oder die Gelenkwinkeländerungsrate umfasst, vorzugsweise wobei das Bestimmen des Spielraums das Bestimmen eines festen Spielraums umfasst, basierend auf experimentellen Daten, oder das Bestimmen eines variablen Spielraums basierend auf dem aktuellen Betriebszustand der Fahrzeugkombination (10).

7. Das Verfahren (100) gemäß einem der vorstehenden Ansprüche, das ferner Folgendes umfasst:
- Bestimmen des sicheren Betriebsbereichs (202) für die Fahrzeugkombination (10) basierend auf einem Gierwinkel und/oder einer Gierbeschleunigung von mindestens einer Einheit (12, 14) der Fahrzeugkombination (10);
- Bestimmen eines aktuellen Wertes für den Gierwinkel und/oder die Gierbeschleunigung der mindestens einen Einheit (12, 14);
- Vergleichen des aktuellen Wertes für den Gierwinkel und/oder die Gierbeschleunigung mit dem sicheren Betriebsbereich (202); und
- wenn ein Punkt, der durch die aktuellen Werte definiert ist, außerhalb des sicheren Betriebsbereichs (202) liegt, Bestimmen, dass eine Gierinstabilität in der Fahrzeugkombination (10) vorliegt.

8. Das Verfahren (100) gemäß Anspruch 7, wobei das Bestimmen des sicheren Betriebsbereichs (202) des Gierwinkels und/oder der Gierbeschleunigung der mindestens einen Einheit (12, 14) das Bestimmen eines Referenzwertes für den Gierwinkel und/oder die Gierbeschleunigung der mindestens einen Einheit (12, 14) basierend auf dem aktuellen Betriebszustand der Fahrzeugkombination (10) umfasst.

9. Das Verfahren (100) gemäß Anspruch 8, wobei der Referenzwert für den Gierwinkel der mindestens einen Einheit (12, 14) ein gemessener Wert ist oder durch die Integration der Gierrate der Einheit (12, 14) gegeben ist.

10. Das Verfahren (100) gemäß Anspruch 8 oder 9, wobei der Referenzwert für die Gierbeschleunigung der mindestens einen Einheit (12, 14) ein gemessener Wert ist oder durch die Ableitung der Gierrate der Einheit (12, 14) gegeben ist.

11. Das Verfahren (100) gemäß einem der Ansprüche 8 bis 10, wobei das Bestimmen des sicheren Betriebsbereichs (202) das Bestimmen eines Spielraums um den Referenzwert für den Gelenkwinkel und/oder die Gelenkwinkeländerungsrate umfasst, vorzugsweise wobei das Bestimmen des Spielraums das Bestimmen eines festen Spielraums umfasst, basierend auf experimentellen Daten, oder das Bestimmen eines variablen Spielraums basierend auf dem aktuellen Betriebszustand der Fahrzeugkombination (10).

12. Das Verfahren (100) gemäß einem der vorstehenden Ansprüche, umfassend:
- Bestimmen des sicheren Betriebsbereichs (202) für die Fahrzeugkombination (10) basierend auf mindestens zwei Parametern und einem aktuellen Betriebszustand der Fahrzeugkombination (10);
- Bestimmen eines aktuellen Wertes jedes der mindestens zwei Parameter;
- Vergleichen der aktuellen Werte mit dem sicheren Betriebsbereich (202); und
- wenn ein Punkt, der durch die aktuellen Werte definiert ist, außerhalb des sicheren Betriebsbereichs (202) liegt, Bestimmen, dass eine Gierinstabilität in der Fahrzeugkombination (10) vorliegt.

13. Das Verfahren (100) gemäß Anspruch 12, wobei die mindestens zwei Parameter Folgendes umfassen: eine Gierrate von mindestens einer Einheit (12, 14) der Fahrzeugkombination (10) und mindestens einen der folgenden Werte: die Gierrate einer anderen Einheit der Fahrzeugkombination (10), ein Gelenkwinkel aufeinanderfolgender Einheiten (12, 14), eine Gelenkwinkeländerungsrate der aufeinanderfolgenden Einheiten (12, 14), der Gierwinkel mindestens einer Einheit (12, 14) der Fahrzeugkombination (10) und die Gierbeschleunigung mindestens einer Einheit (12, 14) der Fahrzeugkombination (10).

14. Das Verfahren (100) gemäß einem der vorstehenden Ansprüche, umfassend mindestens eines der folgenden Elemente: Bestimmen, dass ein Schleudern in der Fahrzeugkombination (10) vorliegt, basierend auf Werten der Zugmaschine (12), und Bestimmen, dass ein Anhänger-Schwingen in der Fahrzeugkombination (10) vorliegt, basierend auf Werten von mindestens einer Anhängereinheit (14).

15. Ein computerlesbares Medium, das Anweisungen enthält, die, wenn sie von einem oder mehreren Prozessoren (910) ausgeführt werden, die Ausführung der Verfahrensschritte gemäß einem der vorstehenden Ansprüche bewirken.

## Revendications

1. Procédé (100) de détection d'une instabilité en lacet dans un ensemble de véhicules (10), l'ensemble de véhicules comprenant une unité tractrice (12) et au moins une unité tractée (14), le procédé comprenant :
- la détermination (102) d'une enveloppe de fonctionnement sûre (202) pour l'ensemble de véhicules (10) sur la base d'une vitesse de lacet d'au moins une unité (12, 14) et d'un état de fonctionnement actuel de l'ensemble de véhicules (10) ;
- la détermination (104) d'une valeur actuelle de la vitesse de lacet de l'au moins une unité (12, 14) ;
- la comparaison (106) de la valeur actuelle à l'enveloppe de fonctionnement sûre (202) ; et
- si la valeur actuelle est en dehors de l'enveloppe de fonctionnement sûre (202), la détermination qu'une instabilité en lacet est présente dans l'ensemble de véhicules (10) ;
- **caractérisé en ce que** la détermination de l'enveloppe de fonctionnement sûre (202) comprend la détermination d'une valeur de référence pour la vitesse de lacet sur la base de l'état de fonctionnement actuel de l'ensemble de véhicules (10), dans lequel la valeur de référence pour la vitesse de lacet de l'unité tractrice, ω_{1,model}, est donnée par : ${ω}_{1 , model} = \frac{{v}_{1 r} {tanδ}_{1}}{{L}_{1}}$ où *v*_{1*r*} est la vitesse longitudinale de l'unité tractrice (12), *δ*₁ est l'angle de braquage des roues de l'unité tractrice (12), et *L*₁ est l'empattement de l'unité tractrice (12).

2. Procédé (100) selon la revendication 1, dans lequel l'état de fonctionnement actuel de l'ensemble de véhicules (10) comprend une vitesse longitudinale de l'ensemble de véhicules (10), une accélération latérale de l'unité tractrice (12), une accélération latérale de l'unité tractée (14), un angle de braquage des roues de l'unité tractrice (12), et/ou un angle de braquage des roues de l'unité tractée (14).

3. Procédé (100) selon l'une quelconque des revendications précédentes, dans lequel la détermination de l'enveloppe de fonctionnement sûre (202) comprend la détermination d'une marge autour de la valeur de référence pour la vitesse de lacet, de préférence dans lequel la détermination de la marge comprend la détermination d'une marge fixe sur la base de données expérimentales, ou la détermination d'une marge variable sur la base de l'état de fonctionnement actuel de l'ensemble de véhicules (10).

4. Procédé (100) selon l'une quelconque des revendications précédentes, comprenant en outre :
- la détermination de l'enveloppe de fonctionnement sûre (202) pour l'ensemble de véhicules (10) sur la base d'un angle d'articulation et/ou d'une vitesse angulaire d'articulation d'unités consécutives ; (12, 14)
- la détermination d'une valeur actuelle pour l'angle d'articulation et/ou la vitesse angulaire d'articulation des unités consécutives (12, 14) ;
- la comparaison de la valeur actuelle pour l'angle d'articulation et/ou la vitesse angulaire d'articulation des unités consécutives (12, 14) à l'enveloppe de fonctionnement sûre (202) ; et
- si un point défini par les valeurs actuelles est en dehors de l'enveloppe de fonctionnement sûre (202), la détermination qu'une instabilité en lacet est présente dans l'ensemble de véhicules (10).

5. Procédé (100) selon la revendication 4, dans lequel la détermination de l'enveloppe de fonctionnement sûre (202) de l'angle d'articulation et/ou de la vitesse angulaire d'articulation des unités consécutives (12, 14) comprend la détermination d'une valeur de référence pour l'angle d'articulation et/ou la vitesse angulaire d'articulation des unités consécutives (12, 14) sur la base de l'état de fonctionnement actuel de l'ensemble de véhicules (10).

6. Procédé (100) selon l'une quelconque des revendications 4 ou 5, dans lequel la détermination de l'enveloppe de fonctionnement sûre (202) comprend la détermination d'une marge autour de la valeur de référence pour l'angle d'articulation et/ou la vitesse angulaire d'articulation, de préférence dans lequel la détermination de la marge comprend la détermination d'une marge fixe sur la base de données expérimentales, ou la détermination d'une marge variable sur la base de l'état de fonctionnement actuel de l'ensemble de véhicules (10).

7. Procédé (100) selon l'une quelconque des revendications précédentes, comprenant en outre :
- la détermination de l'enveloppe de fonctionnement sûre (202) pour l'ensemble de véhicules (10) sur la base d'un angle de lacet et/ou d'une accélération en lacet d'au moins une unité (12, 14) de l'ensemble de véhicules (10) ;
- la détermination d'une valeur actuelle pour l'angle de lacet et/ou l'accélération en lacet de l'au moins une unité (12, 14) ;
- la comparaison de la valeur actuelle pour l'angle de lacet et/ou l'accélération en lacet à l'enveloppe de fonctionnement sûre (202) ; et
- si un point défini par les valeurs actuelles est en dehors de l'enveloppe de fonctionnement sûre (202), la détermination qu'une instabilité en lacet est présente dans l'ensemble de véhicules (10).

8. Procédé (100) selon la revendication 7, dans lequel la détermination de l'enveloppe de fonctionnement sûre (202) de l'angle de lacet et/ou de l'accélération en lacet de l'au moins une unité (12, 14) comprend la détermination d'une valeur de référence pour l'angle de lacet et/ou l'accélération en lacet de l'au moins une unité (12, 14) sur la base de l'état de fonctionnement actuel de l'ensemble de véhicules (10).

9. Procédé (100) selon la revendication 8, dans lequel la valeur de référence pour l'angle de lacet de l'au moins une unité (12, 14) est une valeur mesurée ou est donnée par l'intégrale de la vitesse de lacet de l'unité (12, 14).

10. Procédé (100) selon la revendication 8 ou 9, dans lequel la valeur de référence pour l'accélération en lacet de l'au moins une unité (12, 14) est une valeur mesurée ou est donnée par la dérivée de la vitesse de lacet de l'unité (12, 14).

11. Procédé (100) selon l'une quelconque des revendications 8 à 10, dans lequel la détermination de l'enveloppe de fonctionnement sûre (202) comprend la détermination d'une marge autour de la valeur de référence pour l'angle d'articulation et/ou la vitesse angulaire d'articulation, de préférence dans lequel la détermination de la marge comprend la détermination d'une marge fixe sur la base de données expérimentales, ou la détermination d'une marge variable sur la base de l'état de fonctionnement actuel de l'ensemble de véhicules (10).

12. Procédé (100) selon l'une quelconque des revendications précédentes, comprenant :
- la détermination de l'enveloppe de fonctionnement sûre (202) pour l'ensemble de véhicules (10) sur la base d'au moins deux paramètres et d'un état de fonctionnement actuel de l'ensemble de véhicules (10) ;
- la détermination d'une valeur actuelle de chacun des au moins deux paramètres ;
- la comparaison des valeurs actuelles à l'enveloppe de fonctionnement sûre (202) ; et
- si un point défini par les valeurs actuelles est en dehors de l'enveloppe de fonctionnement sûre (202), la détermination qu'une instabilité en lacet est présente dans l'ensemble de véhicules (10).

13. Procédé (100) selon la revendication 12, dans lequel les au moins deux paramètres comprennent une vitesse de lacet d'au moins une unité (12, 14) de l'ensemble de véhicules (10), et au moins l'une de la vitesse de lacet d'une autre unité de l'ensemble de véhicules (10), un angle d'articulation d'unités consécutives (12, 14), une vitesse angulaire d'articulation des unités consécutives (12, 14), l'angle de lacet d'au moins une unité (12, 14) de l'ensemble de véhicules (10), et l'accélération en lacet d'au moins une unité (12, 14) de l'ensemble de véhicules (10).

14. Procédé (100) selon l'une quelconque des revendications précédentes, comprenant au moins l'une de la détermination qu'une mise en portefeuille est présente dans l'ensemble de véhicules (10) sur la base de valeurs provenant de l'unité tractrice (12) et de la détermination qu'un balancement de remorque est présent dans l'ensemble de véhicules (10) sur la base de valeurs provenant d'au moins une unité tractée (14).

15. Support lisible par ordinateur ayant stocké sur celui-ci des instructions qui, lorsqu'elles sont exécutées par un ou plusieurs processeurs (910), provoquent l'exécution des étapes de procédé selon l'une quelconque des revendications précédentes.
